# FASCICULE DE BREVET EUROPEEN

(11) **EP 3 436 540 B1**
(45) Date de publication et mention de la délivrance du brevet: **19.08.2020**
(21) Numéro de dépôt: 17719656.5
(22) Date de dépôt: 03.04.2017
(51) Int. Cl.: C09J 161/28, C09J 161/24, C08G 12/32, C08G 12/12, C08J 5/12, C08G 12/14

(54) **COMPOSITION ADHESIVE AQUEUSE COMPORTANT UNE RESINE THERMODURCISSABLE**
WÄSSRIGE KLEBSTOFFZUSAMMENSETZUNG MIT EINEM WÄRMEHÄRTBAREN HARZ
AQUEOUS ADHESIVE COMPOSITION COMPRISING A THERMOSETTING RESIN

(30) Priorité: 01.04.2016 FR 1652895
(43) Date de publication de la demande: 06.02.2019
(73) Titulaire: Compagnie Générale des Etablissements Michelin, 63000 Clermont-Ferrand (FR)
(72) Inventeur: DOISNEAU, David, 63040 CLERMONT FERRAND CEDEX 9 (FR)
(74) Mandataire: Louret, Sylvain
(86) Numéro de dépôt international: PCT/FR2017/050775
(87) Numéro de publication internationale: WO 2017/168108

(56) Documents cités:
- JP-A- 2014 213 368
- US-A1- 2009 005 504
- US-A1- 2015 083 358

## Description

La présente invention concerne des compositions adhésives aqueuses destinées à faire adhérer des éléments entre eux, l'utilisation et le procédé de fabrication d'une telle composition, le procédé d'assemblage des éléments au moyen de ces compositions ainsi que les assemblages fabriqués à l'aide de ces compositions.

Il est connu de très longue date de coller deux éléments, par exemple des éléments de bois entre eux à l'aide d'une composition adhésive aqueuse. On connait plusieurs types de compositions dont une composition de type urée-aldéhyde comme décrite dans le document « La colle caurite et son utilisation dans les industries du bois » (A. Villière, ENEF Ecole National des Eaux et Forêts, Annales de l'école nationale des eaux et forêts et de la station de recherches et expériences [ISSN 0365-1827], 1942, Vol. 8, N° 2; p. 207-279). Cette composition comprend une résine urée-aldéhyde à base de formaldéhyde et d'urée.

On utilise cette composition dans un procédé de collage d'articles en bois. Au cours de ce procédé, on enduit un ou plusieurs éléments en bois d'une couche de la composition, on joint les éléments les uns aux autres par l'intermédiaire de la couche de composition et on cuit les éléments ainsi joints. L'assemblage collé ainsi obtenu présente une cohésion élevée grâce aux excellentes propriétés adhésives de la composition.

Toutefois, l'utilisation de formaldéhyde, qui plus est en excès pas rapport à l'urée, entraine la libération de formaldéhyde non seulement lors de la cuisson mais également lors du stockage et de l'utilisation de l'assemblage collé. Or, en raison de l'évolution récente de la réglementation, notamment de la réglementation européenne sur ce type de composé, on souhaite limiter autant que possible, voire supprimer l'utilisation de formaldéhyde ou de précurseur de formaldéhyde.

L'invention a pour but de fournir une composition aqueuse adhésive pour le collage présentant des propriétés adhésives élevées et dépourvue de formaldéhyde.

Or, au cours de leurs recherches, les Demanderesses ont découvert une composition adhésive aqueuse n'utilisant pas de formol libre qui permet de répondre à l'objectif ci-dessus.

Dans leur demande WO2015/049326, les Demanderesses ont proposé des compositions adhésives aqueuses comportant d'une part un aldéhyde aromatique et d'autre part l'urée ou ses dérivés.

La présence de deux fonctions aldéhydes sur l'aldéhyde aromatique est une caractéristique essentielle, nécessaire pour assurer un collage suffisant.

Les compositions adhésives qui y sont décrites constituent une alternative forte intéressante à l'emploi des colles urée-aldéhyde à base de formaldéhyde conventionnelles.

Toutefois, les résines urée-aldéhyde qui y sont décrites sont faiblement solubles dans l'eau et nécessitent notamment une forte agitation lors de leur ajout dans la composition aqueuse. Cette forte agitation fait appel à des appareils coûteux et augmente la durée du procédé.

Il existe donc un besoin en d'autres résines thermodurcissables alternatives, qui pourraient efficacement remplacer les urée-aldéhyde conventionnelles.

Ainsi, un premier objet de l'invention concerne une composition adhésive aqueuse comportant une résine thermodurcissable à base :
A1) d'au moins un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle;
A2) de mélamine et/ou d'au moins un composé de formule (I) : 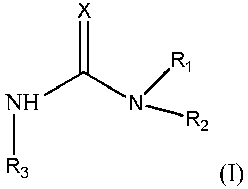 dans laquelle :
   chaque groupe R₁, R₂, R₃ représente, indépendamment l'un de l'autre, un groupe alkyle, aryle, arylalkyle, alkylaryle, cycloalkyle ou hydrogène, et
   X représente S, O ou N-R₄ avec R₄ représentant un groupe alkyle, aryle, arylalkyle, alkylaryle, cycloalkyle,
   et dont la teneur en eau de la composition adhésive aqueuse est comprise entre 50 et 90% en poids, de préférence entre 60 et 80% en poids.

La présente description divulgue également une solution adhésive aqueuse comprenant une résine thermodurcissable pré-condensée à base :
A1) d'au moins un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle; et
A2) de mélamine et/ou d'au moins un composé de formule (I) : 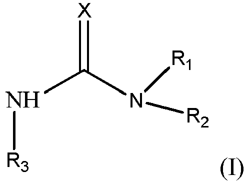 dans laquelle :
   chaque groupe R₁, R₂, R₃ représente, indépendamment l'un de l'autre, un groupe alkyle, aryle, arylalkyle, alkylaryle, cycloalkyle ou hydrogène, et
   X représente S, O ou N-R₄ avec R₄ représentant un groupe alkyle, aryle, arylalkyle, alkylaryle, cycloalkyle.

Un autre objet de l'invention concerne l'utilisation d'une composition adhésive telle que définie ci-dessus ou d'une solution adhésive telle que définie ci-dessus pour le collage de deux éléments, et préférentiellement pour le collage de deux éléments en bois.

L'invention concerne également un procédé de collage de deux éléments, préférentiellement de deux éléments en bois, dans lequel:
- on applique une couche de la composition adhésive aqueuse telle que définie ci-dessus sur au moins l'un des deux éléments, et
- on joint les deux éléments l'un à l'autre par l'intermédiaire de la couche de la composition adhésive aqueuse.

L'invention concerne également un assemblage collé de deux éléments, préférentiellement de deux éléments en bois, comprenant une couche de la composition adhésive aqueuse telle que définie ci-dessus joignant les deux éléments l'un à l'autre.

L'invention ainsi que ses avantages seront aisément compris à la lumière de la description qui suit.

### I - FORMULATION DE LA COMPOSITION ADHESIVE AQUEUSE

Dans la présente description, sauf indication expresse différente, tous les pourcentages (%) indiqués sont des % en masse.

Par "position méta l'une par rapport à l'autre", on entendra que les fonctions visées, sont portées par des carbones du noyau aromatique séparés l'un de l'autre par un unique autre carbone du noyau aromatique.

Par "position para l'une par rapport à l'autre", on entendra que les fonctions visées sont à l'opposées l'une de l'autre, c'est-à-dire en positions 1 et 4 du noyau aromatique à 6 chaînons. De façon analogue, "la position para" par rapport à une fonction est une position opposée à la fonction sur le noyau aromatique à 6 chaînons portant la fonction.

Par "chaînon" d'un noyau, on entendra un atome constitutif du squelette du noyau. Ainsi, par exemple, un noyau benzénique comprend six chaînons, chaque chaînon étant constitué par un atome de carbone. Dans un autre exemple, un noyau furanique comprend cinq chaînons, quatre chaînons étant chacun constitué par un atome de carbone et le chaînon restant étant constitué par un atome d'oxygène.

« CHO » représente la fonction aldéhyde.

« CH₂OH » représente la fonction hydroxyméthyle.

Le « composé A1 » désigne, dans le cadre de l'invention, le composé aromatique défini au paragraphe I.1.

Le « composé A2 » désigne, dans le cadre de l'invention, le composé de formule (I) et/ou de formule (I') défini au paragraphe I.2.

Dans le cadre de l'invention, les produits carbonés mentionnés dans la description, peuvent être d'origine fossile ou biosourcés. Dans ce dernier cas, ils peuvent être, partiellement ou totalement, issus de la biomasse ou obtenus à partir de matières premières renouvelables issues de la biomasse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Par l'expression « composition à base de », il faut bien entendu comprendre une composition comportant le mélange et/ou le produit de réaction des différents constituants de base utilisés pour cette composition, certains d'entre eux pouvant être destinés à réagir ou susceptibles de réagir entre eux ou avec leur environnement chimique proche, au moins en partie, lors des différentes phases de fabrication de la composition, du matériau textile, des composites ou articles finis comportant de tels composites, en particulier au cours d'une étape de cuisson.

La composition adhésive aqueuse selon l'invention comprend donc une (c'est-à-dire une ou plusieurs) résine thermodurcissable à base d'au moins un (c'est-à-dire un ou plusieurs) composé aromatique et au moins un (c'est-à-dire un ou plusieurs) composé de formule (I), constituants qui vont être décrits en détail ci-après.

### 1.1 - Composé aromatique A1

Le premier constituant essentiel de la résine thermodurcissable est un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle. Ainsi, conformément à l'invention, c'est ledit noyau aromatique qui est porteur des fonctions hydroxyméthyle et aldéhyde. Le composé selon l'invention répond donc à la formule générale (II) :

HO-CH₂-Ar-B (II)

où Ar représente un noyau aromatique et B représente CHO ou CH₂OH.

Le noyau aromatique est avantageusement un noyau à 5 ou 6 chaînons, comprenant, en tant que chaînon, des atomes de carbone et éventuellement un ou plusieurs hétéroatomes, en particulier des atomes d'azote, d'oxygène, de soufre, éventuellement oxydé sous forme de N-oxyde ou de S-oxyde. Dans une variante, le noyau aromatique comprend 0, 1 ou 2 hétéroatome(s). Le reste du noyau aromatique peut être substitué ou non.

Le noyau aromatique peut porter 0, 1 ou 2 fonctions aldéhyde, avantageusement 0 ou 1 fonction aldéhyde.

Le noyau aromatique peut porter 1, 2 ou 3 fonctions hydroxyméthyle, avantageusement 1 ou 2 fonction hydroxyméthyle.

En outre, le noyau aromatique peut également porter 0, 1 ou 2 autre(s) fonction(s), en particulier hydroxyle.

Dans le mode de réalisation dans lequel le noyau aromatique est un noyau à 6 chaînons, les fonctions B et hydroxyméthyle sont avantageusement en position méta ou en para l'une par rapport à l'autre.

Dans le mode de réalisation dans lequel le noyau aromatique est un noyau à 5 chaînons, le noyau peut comprendre un ou plusieurs hétéroatomes, en particulier des atomes d'azote, d'oxygène, de soufre, éventuellement oxydé sous forme de N-oxyde ou de S-oxyde. Avantageusement, le noyau aromatique comprend 1 ou 2 hétéroatome(s), de préférence 1 hétéroatome.

Dans ce mode de réalisation dans lequel le noyau aromatique est un noyau à 5 chaînons, au moins une des trois conditions suivantes est respectée :
- le noyau aromatique comprend 0 ou une seule fonction aldéhyde ;
- le noyau aromatique comprend une ou deux fonctions hydroxyméthyle ;
- outre les fonctions aldéhyde et hydroxyméthyle, le reste du noyau aromatique n'est pas substitué.

Avantageusement, ces trois conditions sont respectées.

Dans un premier cas, le noyau aromatique comprend
- une seule fonction aldéhyde ;
- une seule fonction hydroxyméthyle ;
- outre les fonctions aldéhyde et hydroxyméthyle, le reste du noyau aromatique n'est pas substitué.

Dans un deuxième cas, le noyau aromatique comprend
- 0 fonction aldéhyde ;
- deux fonctions hydroxyméthyle ;
- outre les fonctions hydroxyméthyle, le reste du noyau aromatique n'est pas substitué.

Avantageusement, le composé est de formule générale (III) : 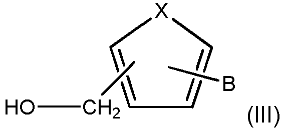 dans laquelle B représente CHO ou CH₂OH, X représente O, NR₅, NO, S, SO, SO₂, SR₆R₇, R₅ représente un hydrogène, un groupe alkyle, aryle, arylalkyle, alkylaryle ou cycloalkyle, R₆, R₇ représentent chacun, indépendamment les uns des autres, un hydrogène, un groupe alkyle, aryle, arylalkyle, alkylaryle ou cycloalkyle.

Avantageusement, le composé est de formule générale (III') : 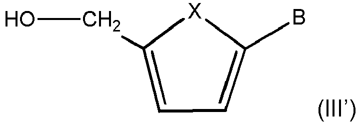 dans laquelle X, B sont tels que définis précédemment.

Dans un mode de réalisation particulièrement avantageux, B représente CHO. Dans un autre mode de réalisation, B représente CH₂OH.

Selon un mode de réalisation préférentiel, X représente O.

Dans une variante, le composé est de formule (IIIa) : 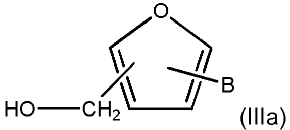 B étant tel que défini précédemment
et plus particulièrement de formule (III'a1) ou (III'a2) :

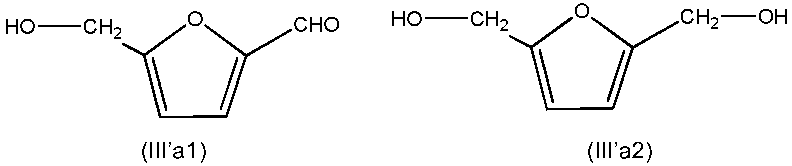

Le 5-(hydroxyméthyl)-furfural (III'a1) est un aldéhyde particulièrement adapté, étant donné que ce composé organique peut facilement être issu de ressources renouvelables. En effet, il est issu notamment de la déshydratation de certains sucres tels que le fructose, le glucose, le sucrose, la cellulose et l'inuline.

Dans un autre mode de réalisation, X représente NR₅ ou NO, avantageusement NR₅. R₅ est tel que défini précédemment.

Dans une variante, le composé est de formule (IIIb) : 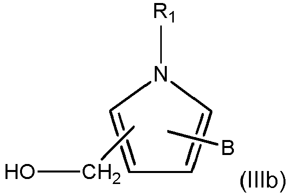 B étant tel que défini précédemment
et plus particulièrement de formule (III'b1) ou (III'b2) : 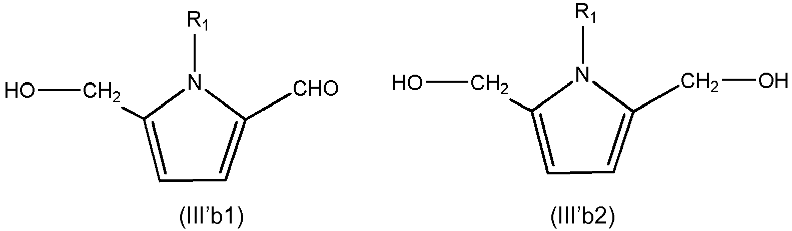 dans lesquelles R₅ représente un hydrogène, un groupe alkyle, aryle, arylalkyle, alkylaryle ou cycloalkyle. Avantageusement R₅ représente un hydrogène ou un groupe alkyle en C₁-C₆.

Dans un autre mode de réalisation, X représente S, SO, SO₂ ou SR₆R₇.

Dans une variante, le composé est de formule (IIIc) :
B étant tel que défini précédemment 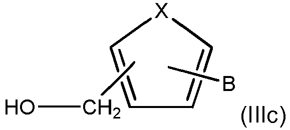 avec X représente S, SR₆R₇, SO, SO₂, R₆, R₇ représentent chacun, indépendamment les uns des autres, un hydrogène, un groupe alkyle, aryle, arylalkyle, alkylaryle ou cycloalkyle, B étant tel que défini précédemment ;
et plus particulièrement de formule (III'c1) ou (III'c2) : 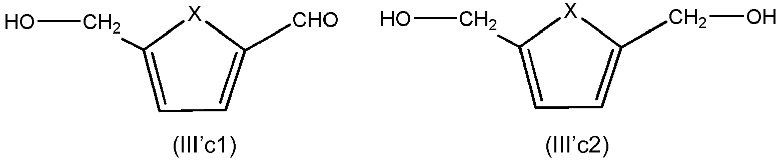 dans laquelle X représente S, SR₆R₇, SO, SO₂, R₆, R₃ représentent chacun, indépendamment les uns des autres, un hydrogène, un groupe alkyle, aryle, arylalkyle, alkylaryle ou cycloalkyle.

Le composé peut ainsi être :

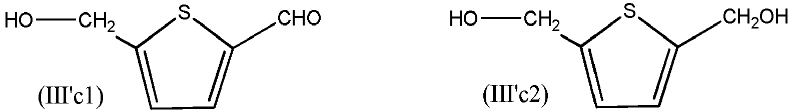

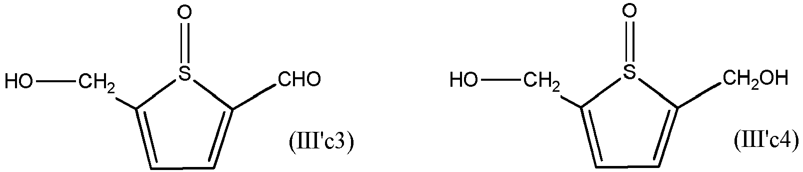

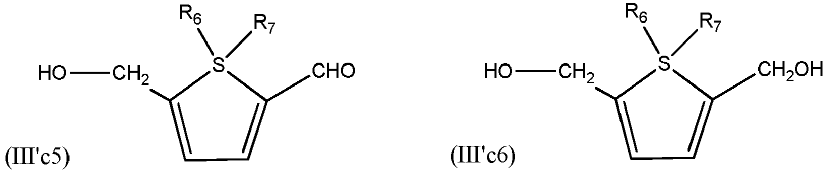

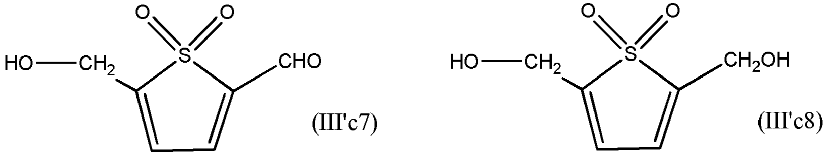

Avantageusement R₆, R₇ représentent chacun, l'un indépendamment de l'autre, un radical alkyle en C₁-C₆.

Le composé est avantageusement de formule (III'c1) ou (III'c2).

Dans une autre variante, le noyau aromatique est un noyau à 6 chaînons, pouvant comprendre 0, un ou plusieurs hétéroatomes, en particulier d'azote, éventuellement oxydé sous forme de N-oxyde. Dans une variante, le noyau aromatique comprend 0, 1, ou 2 hétéroatome(s).

Les fonctions B et hydroxyméthyle sont avantageusement en position méta ou en para l'une par rapport à l'autre.

Le noyau aromatique peut porter 0, 1 ou 2 fonctions aldéhyde, avantageusement 0 ou 1 fonction aldéhyde.

Le noyau aromatique peut porter 1, 2 ou 3 fonctions hydroxyméthyle, avantageusement 1 ou 2 fonctions hydroxyméthyle.

En outre, le noyau aromatique peut également porter 0, 1 ou 2 autre(s) fonction(s), en particulier hydroxyle.

Avantageusement, le composé est de formule générale (IV) :

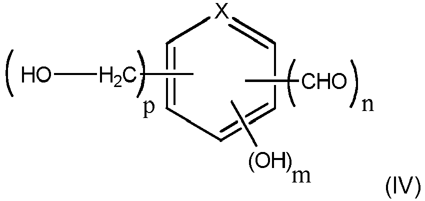

dans laquelle X représente C ou NR₅, n vaut 0, 1 ou 2, m vaut 0 ou 1, p vaut 1, 2 ou 3. R₅ représente un hydrogène, un groupe alkyle, aryle, arylalkyle, alkylaryle ou cycloalkyle. Conformément à l'invention, p+n>1 avec p>0.

Avantageusement R₅ représente un hydrogène ou un groupe alkyle en C₁-C₆.

Dans une variante, n vaut 1, m vaut 0 et p vaut 1.

Dans une autre variante, n vaut 1, m vaut 1 et p vaut 1.

Dans une autre variante, n vaut 2, m vaut 1 et p vaut 1.

Dans une autre variante, n vaut 1, m vaut 1 et p vaut 2.

Dans une autre variante, n vaut 0, m vaut 0 et p vaut 2.

Dans une autre variante, n vaut 0, m vaut 1 et p vaut 2.

Dans une autre variante, n vaut 1, m vaut 1 et p vaut 2.

Dans une autre variante, n vaut 0, m vaut 1 et p vaut 3.

Préférentiellement le noyau aromatique de l'aldéhyde est un noyau benzénique. Plus préférentiellement, cet aldéhyde est choisi dans le groupe constitué par le 2-hydroxymethyl-benzène-1-carboxaldéhyde, le 3- hydroxymethyl-benzène-1-carboxaldéhyde, le 4-hydroxymethyl-benzène-1-carboxaldéhyde, le 3-hydroxymethyl-6-hydroxy-benzène-1-carboxaldéhyde, le 3-hydroxymethyl-4-hydroxy-benzène-1-carboxaldéhyde, le 3-hydroxymethyl-2-hydroxy-benzène-1-carboxaldéhyde, le 3-hydroxymethyl-2-hydroxy-benzène-1,5-dicarboxaldéhyde, le 5-hydroxymethyl-2-hydroxy-benzène-1,3-dicarboxaldéhyde, le 3,5-hydroxymethyl-4-hydroxy-benzène-1-carboxaldéhyde, le 3,5-hydroxymethyl-2-hydroxy-benzène-1-carboxaldéhyde, le 1,2-hydroxymethyl-benzène, le 1,3-hydroxymethyl-benzène, le 1,4-hydroxymethyl-benzène, le 1,3-hydroxymethyl-6-hydroxy-benzène, le 1,3-hydroxymethyl-4-hydroxy-benzène, le 1,3-hydroxymethyl-2-hydroxy-benzène, le 1,3,5-hydroxymethyl-2-hydroxy-benzène, le 1,3-hydroxymethyl-6-hydroxy-benzène, le 1,3,5-hydroxymethyl-4-hydroxy-benzène, le 1,3,2-hydroxymethyl-2-hydroxy-benzène et les mélanges de ces composés.

Encore plus préférentiellement le composé aromatique utilisé est le 1-hydroxymethyl-benzène-4-carboxaldéhyde de formule (IVa) ou le 1,4-hydroxymethyl-benzène de formule (IVb) :

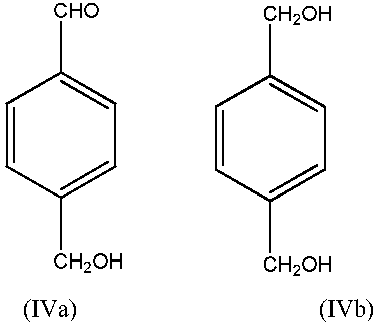

De préférence, lorsque la résine thermodurcissable est à base d'un ou plusieurs composés de formule **(II)**, la composition est dépourvue de formaldéhyde.

Lorsque la résine thermodurcissable est à base d'un ou plusieurs composés de formule (II) et d'aldéhydes, chaque aldéhyde est préférentiellement différent du formaldéhyde. La composition est alors également dépourvue de formaldéhyde.

En d'autres termes et de manière préférée, lorsqu'un aldéhyde est présent, le ou chaque aldéhyde de la résine thermodurcissable est différent du formaldéhyde.

Par dépourvue de formaldéhyde, on entend que le taux massique de formaldéhyde en poids total du ou des aldéhydes est inférieur ou égal à 10%, de préférence à 5% et plus préférentiellement à 2%, ces pourcentages correspondant à des traces susceptibles d'être présentes dans le ou les aldéhydes utilisés industriellement.

### I.2 - Composé de formule (I) et/ou (I') - composé A2

Le deuxième constituant essentiel de la résine est la mélamine de formule (I') 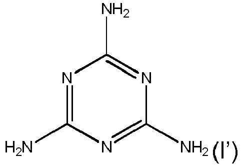 et/ou un composé de formule (I) 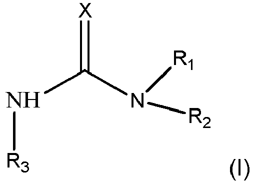 dans laquelle :
chaque groupe R₁, R₂, R₃ représente, indépendamment l'un de l'autre, un groupe alkyle, aryle, arylalkyle, alkylaryle, cycloalkyle ou hydrogène, et
X représente S, O ou N-R₄ avec R₄ représentant un groupe alkyle, aryle, arylalkyle, alkylaryle, cycloalkyle.

Ainsi, dans un mode de réalisation, on pourra avoir uniquement la mélamine en tant que deuxième constituant essentiel de la résine. Pour rappel, la mélamine est également appelée 1, 3, 5-triazine-2,4,6-triamine.

Dans un autre mode de réalisation, on pourra avoir uniquement le composé de formule (I) en tant que deuxième constituant essentiel de la résine.

Dans encore un autre mode de réalisation, on pourra avoir la mélamine de formule (I') et le composé de formule (I) en tant que deuxième constituant essentiel de la résine.

Conformément à l'invention, le composé A2 peut être, dans un mode de réalisation, une molécule simple de formule (I) et/ou (I'). Une telle molécule simple ne comprend pas de motif répétitif.

Conformément à l'invention, le composé A2 peut être, dans un autre mode de réalisation, une résine pré-condensée à base :
- d'au moins un composé de formule (I) et/ou (I') ; et
- d'au moins un composé susceptible de réagir avec ledit composé de formule (I) et/ou (I') comprenant au moins une fonction aldéhyde et/ou au moins un composé susceptible de réagir avec ledit composé de formule (I) et/ou (I') comprenant au moins deux fonctions hydroxyméthyle portées par un noyau aromatique.

Une telle résine pré-condensée à base de composé de formule (I) et/ou (I') est conforme à l'invention et comprend, contrairement à la molécule simple décrite ci-dessus, un motif répétitif. En l'espèce, le motif répétitif comprend au moins l'enchaînement -N-C(=X)-N, où X est tel que défini précédemment pour le composé de formule (I) et/ou au moins l'enchainement suivant pour la mélamine de formule (I') :

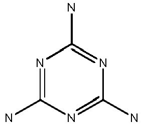

Dans un autre mode de réalisation, le composé A2 est un mélange d'un composé de formule (I) et/ou (I') formant une molécule simple et d'une résine pré-condensée à base de composé de formule (I) et/ou (I').

Dans les modes de réalisation particuliers qui suivent, on décrit le composé de formule (I) et/ou (I'). Par souci de clarté, on y décrit le « composé de formule (I) » et/ou « composé de formule (I') » sous sa forme de molécule simple. Ce composé de formule (I) et/ ou ce composé de formule (I') pourra ensuite être condensé et définira en partie le motif répétitif. Les caractéristiques de la résine pré-condensée sont décrites plus en détail par la suite.

Dans le composé de formule (I), de préférence, R₁ et/ou R₂ et/ou R₃ représente l'hydrogène.

Dans le composé de formule (I), de préférence, X représente O.

Plus préférentiellement, le composé de formule (I) est l'urée de formule (I") ci-dessous.

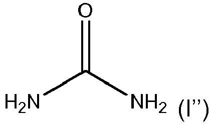

L'urée peut être issue de ressources renouvelables. En outre, elle est abondante et particulièrement peu coûteuse.

Dans un mode de réalisation, le composé A2 comprend une résine pré-condensée à base de composé de formule (I) et/ou (I') tel que décrit précédemment.

Cette résine pré-condensée est avantageusement à base :
- d'au moins un composé de formule (I) et/ou (I') tel que défini précédemment, et préférentiellement choisi dans le groupe constitué par l'urée, la mélamine et les mélanges de ces composés ; et
- d'au moins un composé susceptible de réagir avec ledit composé de formule (I) et/ou (I') comprenant au moins une fonction aldéhyde et/ou au moins un composé susceptible de réagir avec ledit composé de formule (I) et/ou (I') comprenant au moins deux fonctions hydroxyméthyle portées par un noyau aromatique.

Le composé susceptible de réagir avec ledit composé de formule (I) et/ou (I') peut être un composé aromatique tel que défini précédemment au paragraphe I.1, un composé de formule Ar-(CHO)₂, où Ar est tel que défini précédemment pour le composé aromatique du paragraphe I.1, ou tout autre aldéhyde. Avantageusement, ledit composé est choisi dans le groupe constitué par un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, le formaldéhyde, le furfuraldéhyde, le 2,5-furanedicarboxaldéhyde, le 1,4-benzènedicarboxaldéhyde, le 1,3-benzènedicarboxaldéhyde, le 1,2-benzènedicarboxaldéhyde et les mélanges de ces composés. Très avantageusement, lorsque le composé est un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, ce composé est choisi dans le groupe constitué par le 5-(hydroxyméthyl)-furfural, le 2,5-di(hydroxyméthyle)furane et les mélanges de ces composés.

Ainsi, dans la résine pré-condensée à base de composé de formule (I) et/ou (I'), le motif répétitif répond aux caractéristiques du composé de formule (I) et/ou (I') définies précédemment à l'exception qu'au moins un des atomes d'azote est relié à un autre motif.

Quel que soit le composé autre que le composé de formule (I) et/ou (I') à la base de la résine pré-condensée, cette résine pré-condensée est dépourvue de formaldéhyde libre. En effet, même dans le cas où la résine pré-condensée est à base d'un composé de formule (I) et/ou (I') tel que décrit précédemment et de formaldéhyde, le formaldéhyde ayant déjà réagi avec le composé de formule (I) et/ou (I'), la résine pré-condensée est dépourvue de formaldéhyde libre susceptible de pouvoir réagir avec un composé A1 conforme à l'invention dans une étape ultérieure.

Le composé A2 peut également comprendre un mélange d'une molécule libre de composé de formule (I) et/ou (I') et d'une résine pré-condensée à base de composé de formule (I) et/ou (I'), telle que décrite précédemment. En particulier, le composé A2 peut également comprendre un mélange d'urée et d'une résine pré-condensée à base d'urée.

### I.3 - Latex d'élastomère insaturé

On rappelle qu'un latex est une dispersion stable de microparticules d'élastomère(s) en suspension dans une solution généralement aqueuse. Un latex d'élastomère est donc une composition dans un état liquide comprenant un solvant liquide, généralement de l'eau, et au moins un élastomère ou un caoutchouc dispersé dans le solvant liquide de façon à former une émulsion. Ainsi, le latex n'est pas une composition de caoutchouc qui comprend une matrice d'élastomère ou de caoutchouc dans laquelle est dispersé au moins un autre composant. Une composition de caoutchouc est dans un état plastique à l'état cru (non-réticulé) et dans un état élastique à l'état cuit (réticulé) mais en aucun cas dans un état liquide comme l'est un latex.

Dans un mode de réalisation, la composition selon l'invention ne comprend pas de latex.

Dans un autre mode de réalisation, la composition selon l'invention comprend du latex.

Les latex d'élastomère insaturé (c'est-à-dire porteur de doubles liaisons carbone-carbone), notamment d'élastomère diénique, sont bien connus de l'homme du métier.

Conformément à l'invention, l'élastomère insaturé du latex est préférentiellement un élastomère diénique, plus préférentiellement un élastomère diénique choisi dans le groupe constitué par les polybutadiènes, les copolymères de butadiène, les polyisoprènes, les copolymères d'isoprène et les mélanges de ces élastomères. Il est encore plus préférentiellement choisi dans le groupe constitué par les copolymères de butadiène, les terpolymères vinylpyridine-styrène-butadiène, le caoutchouc naturel, et les mélanges de ces élastomères.

Dans un mode particulier, la composition selon l'invention comprend moins de 16 % (valeur exclue) en masse de latex d'élastomère diénique insaturé. Par pourcentage en masse de la composition, on comprend le pourcentage en masse de la composition totale, c'est-à-dire masse de latex sur masse des constituants secs plus masse de l'eau.

De préférence, la composition comprend au plus 10 %, de préférence au plus 5 %, et plus préférentiellement au plus 1% en masse de latex d'élastomère diénique insaturé.

### I.4 - Solution adhésive aqueuse comprenant une résine pré-condensée de l'invention

L'invention a également pour objet une solution adhésive aqueuse comprenant une résine pré-condensée à base :
A1) d'au moins un composé aromatique porteur d'au moins deux fonctions, l'une de ces fonctions étant une fonction hydroxyméthyle, l'autre étant une fonction aldéhyde ou une fonction hydroxyméthyle, le composé aromatique comprend au moins un noyau aromatique; et
A2) d'au moins un composé de formule (I) et/ou (I').

Le composé aromatique est tel que décrit précédemment, en particulier il s'agit d'un composé de formule (II) telle que définie précédemment.

Le composé de formule (I) et/ou (I') est tel que décrit précédemment, en particulier il s'agit préférentiellement d'un composé de formule (I) et/ou (I') qui est une molécule simple.

On définit N1 comme le nombre de sites réactifs du composé aromatique défini comme suit : une fonction aldéhyde représente deux sites réactifs et une fonction hydroxyméthyle représente un site réactif. Ainsi, par exemple, le 5-(hydroxyméthyl)-furfural a N1=3 sites réactifs et le 2,5-di(hydroxyméthyle)furane a N1=2 sites réactifs.

Dans le cas de la mélamine de formule (I'), on définit N'2 comme le nombre de sites réactifs du composé de la mélamine de formule (I') comme suit : chaque groupe - NH₂ de la mélamine de formule (I') représente deux sites réactifs. Ainsi, la mélamine a N'2=6 sites réactifs.

Dans le cas du composé de formule (I), on définit N2 comme le nombre de site réactifs du composé de formule (I) comme suit: chaque fonction amine secondaire du composé de formule (I) adjacente à la fonction -(C=X)- représente un site réactif et chaque fonction amine primaire du composé de formule (I) adjacente à la fonction - (C=X)- représente deux sites réactifs. Ainsi, par exemple, l'urée a N2=4 sites réactifs.

La résine pré-condensée est obtenue par mélangeage :
- du composé aromatique A1), et
- de mélamine et/ou du composé de formule (I),
dans un solvant basique ayant de préférence un pH compris entre 8 et 13, plus préférentiellement entre 9 et 12, ou dans un solvant acide ou neutre ayant de préférence un pH compris entre 4 et 7, plus préférentiellement entre 5 et 7.

La résine pré-condensée est avantageusement préparée en mélangeant progressivement le composé de formule (I) et/ou (I') et le composé aromatique A1 dans une solution aqueuse.

Dans une première variante, on mélange les composants à base de la résine pré-condensée dans un solvant basique tel qu'une solution aqueuse de soude, ayant de préférence un pH compris entre 8 et 13, plus préférentiellement entre 9 et 12.

Dans une deuxième variante, on mélange les composants à base de la résine pré-condensée dans un solvant acide ou neutre tel qu'une solution aqueuse ayant un pH compris entre 4 et 7, de préférence entre 5 et 7.

Quelle que soit la variante, l'ensemble des constituants est mélangé sous agitation pendant un temps variable selon la température utilisée et la composition spécifique visée, par exemple pendant une durée pouvant varier entre 5 min et 2 h, par exemple 10 min, à une température comprise entre 20°C et 90°C, préférentiellement entre 20 et 60°C.

Dans la première variante, on ajoute ensuite avantageusement un acide de façon à neutraliser la base et à obtenir une résine pré-condensée pouvant être stockée et utilisée ultérieurement.

Dans la deuxième variante, on ajoute ensuite avantageusement une base de façon à neutraliser l'acide et à obtenir une résine pré-condensée pouvant être stockée et utilisée ultérieurement.

Afin de préparer la résine pré-condensée, la quantité molaire n2 de composé A2 de formule (I), la quantité molaire n'2 de composé A2 de formule (I') t la quantité molaire n1 du composé aromatique A1 sont telles que [(n2^{∗}N2)+(n'2^{∗}N'2)]/(n1^{∗}N1)>1, de préférence 1<[(n2^{∗}N2)+(n'2^{∗}N'2))/(n1^{∗}N1)<5.

La résine pré-condensée est ensuite généralement diluée dans l'eau.

### I.5 Additifs - Fabrication de la composition adhésive aqueuse

La composition adhésive aqueuse conforme à l'invention peut bien entendu comporter tout ou partie des additifs habituels pour compositions adhésives aqueuses telles que ceux utilisés dans les colles aldéhyde-urée conventionnelles. On citera par exemple des colorants, charges, antioxydants ou autre stabilisants, des épaississants, par exemple la carboxyméthylecellulose ou des gélifiants, par exemple une gélatine, permettant d'augmenter la viscosité de la composition. On citera également les additifs permettant de modifier le temps de prise ou de gel et le temps d'ouverture de la résine. De façon connue par l'homme du métier, le temps de prise ou de gel est le temps pendant lequel on peut appliquer la résine sur son substrat et le temps d'ouverture est le temps pendant lequel, après application de la résine sur son substrat, on peut laisser la résine à l'air libre sans altérer la qualité de la liaison adhésive ultérieure avec le substrat complémentaire. Le temps de prise ou de gel et le temps d'ouverture sont notamment fonction de la température, de la pression ou encore de la concentration en résine.

Dans un mode de réalisation, la composition adhésive aqueuse comprend au moins un acide. L'acide est par exemple un acide fort (acide chlorhydrique par exemple) ou un acide organique. La quantité molaire d'acide est comprise entre 1 et 20 % de la quantité molaire de composé de formule (I) et/ou (I').

Typiquement, lors d'une première étape de résinification, on mélange, avantageusement dans l'eau, les constituants de la résine thermodurcissable elle-même.

Cette première étape de résinification peut être réalisée selon plusieurs modes de réalisations.

Avant de décrire en détail les différents mode de réalisation, on précisera tout d'abord que la résine thermodurcissable de la composition adhésive aqueuse peut être obtenue par mélange des constituants de la résine, c'est-à-dire dudit composé aromatique A1) tel que défini précédemment et de mélamine ou dudit composé de formule (I) tel que défini précédemment dans un solvant soit basique, ayant de préférence un pH compris entre 8 et 13, plus préférentiellement entre 9 et 12, soit acide ou neutre ayant de préférence un pH compris entre 4 et 7, plus préférentiellement entre 5 et 7. Ce solvant est avantageusement de l'eau rendue basique par ajout d'une base ou rendue acide par ajout d'un acide.

Dans un premier mode de réalisation, on utilise une résine pré-condensée à base de composé de formule (I) et/ou (I') telle que définie au paragraphe I.2, c'est-à-dire à base :
- d'au moins un composé de formule (I) et/ou (I'), avantageusement choisi dans le groupe constitué par l'urée, la mélamine et les mélanges de ces composés ; et
- d'au moins un composé susceptible de réagir avec ledit composé de formule (I) et/ou (I') comprenant au moins une fonction aldéhyde et/ou au moins un composé susceptible de réagir avec ledit composé de formule (I) et/ou (I') comprenant au moins deux fonctions hydroxyméthyle portées par un noyau aromatique.

La résine pré-condensée à base de composé de formule (I) et/ou (I') A2 est avantageusement préparée en mélangeant progressivement le composé de formule (I) et/ou (I') et le composé comprenant au moins une fonction aldéhyde et/ou le composé comprenant au moins deux fonctions hydroxyméthyle portées par un noyau aromatique, par exemple le formaldéhyde, dans des quantités molaires telles que décrites précédemment.

Dans une première variante, on mélange les composants à base de la résine pré-condensée dans un solvant basique tel qu'une solution aqueuse de soude, ayant de préférence un pH compris entre 8 et 13, plus préférentiellement entre 9 et 12.

Ainsi, la résine pré-condensée est obtenue par mélangeage :
- dudit composé de formule (I) et/ou (I'), et
- dudit composé susceptible de réagir avec ledit composé de formule (I) et/ou (I'), dans un solvant basique ayant de préférence un pH compris entre 8 et 13, plus préférentiellement entre 9 et 12.

Dans une deuxième variante, on mélange les composants à base de la résine pré-condensée dans un solvant acide ou neutre tel qu'une solution aqueuse ayant un pH compris entre 4 et 7, de préférence entre 5 et 7.

Ainsi, la résine pré-condensée est obtenue par mélangeage :
- dudit composé de formule (I) et/ou (I'), et
- dudit composé susceptible de réagir avec ledit composé de formule (I) et/ou (I'), dans un solvant acide ou neutre ayant de préférence un pH compris entre 4 et 7, plus préférentiellement entre 5 et 7.

Quelle que soit la variante, l'ensemble des constituants est mélangé sous agitation pendant un temps variable selon la température utilisée et la composition spécifique visée, par exemple pendant une durée pouvant varier entre 5 min et 2 h, par exemple 10 min, à une température comprise entre 20°C et 90°C, préférentiellement entre 20 et 60°C.

Comme décrit précédemment, on peut avantageusement neutraliser le milieu de façon à obtenir une résine pré-condensée pouvant être stockée et utilisée ultérieurement.

Puis, dans ce premier mode de réalisation, la composition adhésive peut être obtenue par mélangeage :
- de cette résine pré-condensée, et
- du composé aromatique A1),
dans un solvant basique ayant de préférence un pH compris entre 8 et 13, plus préférentiellement entre 9 et 12, ou dans un solvant acide ou neutre ayant de préférence un pH compris entre 4 et 7, plus préférentiellement entre 5 et 7.
En particulier, on mélange progressivement cette résine pré-condensée à base de composé de formule (I) et/ou (I') (composé A2), et le composé aromatique A1 dans un solvant basique tel qu'une solution aqueuse de soude, ayant de préférence un pH compris entre 8 et 13, plus préférentiellement entre 9 et 12 ou bien dans un solvant acide ou neutre tel qu'une solution aqueuse ayant un pH compris entre 4 et 7, de préférence entre 5 et 7. Que ce soit en milieu acide ou basique, l'ensemble des constituants est mélangé sous agitation pendant un temps variable selon la température utilisée et la composition spécifique visée, par exemple pendant une durée pouvant varier entre 5 min et 2 h, par exemple 10 min, à une température comprise entre 20°C et 90°C, préférentiellement entre 20 et 60°C. L'homme du métier saura ajuster les quantités molaires de résine pré-condensée à base de composé de formule (I) et/ou (I') A2 et du composé aromatique A1 afin d'obtenir une réticulation et une concentration adaptées à l'usage recherché, notamment en fonction de la nature de la résine pré-condensée à base de composé de formule (I) et/ou (I') A2.

Dans un deuxième mode de réalisation, on utilise une résine pré-condensée telle que décrite au paragraphe I-4, c'est-à-dire à base :
A1) d'au moins un composé aromatique porteur d'au moins deux fonctions, l'une de ces fonctions étant une fonction hydroxyméthyle, l'autre étant une fonction aldéhyde ou une fonction hydroxyméthyle, le composé aromatique comprend au moins un noyau aromatique, par exemple le 5-(hydroxyméthyl)-furfural et
A2) d'au moins un composé de formule (I) et/ou (I'), par exemple l'urée et/ou la mélamine. Dans ce deuxième mode de réalisation, la résine pré-condensée à base de composé de formule (I) et/ou (I') conforme à l'invention est préparée dans des conditions analogues à la résine pré-condensée à base de composé de formule (I) et/ou (I') du premier mode de réalisation. Puis, on mélange progressivement cette résine pré-condensée à base de composé de formule (I) et/ou (I') selon l'invention A2 et le composé aromatique A1 dans des conditions analogues à celles du premier mode de réalisation. Là encore, l'homme du métier saura ajuster les quantités molaires de résine pré-condensée à base de composé de formule (I) et/ou (I') A2 et du composé aromatique A1 afin d'obtenir une réticulation et une concentration adaptées à l'usage recherché, notamment en fonction de la nature de la résine pré-condensée à base de composé de formule (I) et/ou (I') A2.

Dans un troisième mode de réalisation, on utilise un composé de formule (I) et/ou (I') A2 selon l'invention sous forme d'une molécule simple, par exemple l'urée ou la mélamine.

Dans une première variante, la résine thermodurcissable est obtenue par :
- mélangeage du composé de formule (I) et/ou (I') (A2) sous forme d'une molécule simple dans un solvant basique ayant de préférence un pH compris entre 8 et 13, plus préférentiellement entre 9 et 12 ou dans un solvant acide ou neutre ayant de préférence un pH compris entre 4 et 7, de préférence entre 5 et 7,
- puis ajout du composé aromatique A1).

En particulier, on mélange tout d'abord le composé de formule (I) et/ou (I') A2 dans un solvant basique tel qu'une solution aqueuse de soude, ayant de préférence un pH compris entre 8 et 13, plus préférentiellement entre 9 et 12 ou bien dans un solvant acide ou neutre tel qu'une solution aqueuse ayant un pH compris entre 4 et 7, de préférence entre 5 et 7. Puis, on ajoute le composé aromatique A1). En particulier, on ajoute progressivement le composé aromatique A1 dans des conditions analogues à celles du premier mode de réalisation.

Dans une deuxième variante, la résine thermodurcissable est obtenue par :
- mélangeage du composé aromatique A1) dans un solvant basique ayant de préférence un pH compris entre 8 et 13, plus préférentiellement entre 9 et 12 ou dans un solvant acide ou neutre ayant de préférence un pH compris entre 4 et 7, de préférence entre 5 et 7,
- puis ajout du composé de formule (I) et/ou (I') A2 sous forme d'une molécule simple.

En particulier, on mélange tout d'abord le composé aromatique A1 dans une solution aqueuse, de préférence dans un solvant basique tel qu'une solution aqueuse de soude, ayant de préférence un pH compris entre 8 et 13, plus préférentiellement entre 9 et 12. Puis, on ajoute le composé de formule (I) et/ou (I') A2 et on mélange les composants dans des conditions analogues à celles du premier mode de réalisation.

Ce troisième mode de réalisation est particulièrement avantageux par rapport aux premier et deuxième modes de réalisation car il permet d'obtenir un temps de gel ou de prise de la composition adhésive plus grand.

On mélange une quantité molaire n2 de composé de formule (I), une quantité molaire n'2 de composé de formule (I') et une quantité molaire n1 du composé aromatique A1 telles que 0,3≤[(n2^{∗}N2)+(n'2^{∗}N'2)]/(n1^{∗}N1)≤3, de préférence 1<[(n2^{∗}N2)+(n'2^{∗}N'2)]/(n1^{∗}N1)<2.

Dans l'un quelconque de ces trois modes de réalisation, on obtient ensuite directement la composition adhésive aqueuse de l'invention ou la résine thermodurcissable partiellement réticulée est diluée dans l'eau, pour constituer la composition adhésive aqueuse de l'invention.

Le cas échéant, lorsqu'on utilise un solvant acide, on peut avantageusement ajouter une base afin de neutraliser l'acide. De façon analogue, le cas échéant, lorsqu'on utilise un solvant basique, on peut avantageusement ajouter un acide afin de neutraliser la base.

Par exemple, les constituants de la composition adhésive sont ajoutés dans l'ordre suivant : l'eau, d'éventuels additifs solubles dans l'eau, la résine thermodurcissable partiellement réticulée (diluée). L'ensemble est mélangé sous agitation pendant 1 à 30 min, par exemple à 20°C.

Lorsque la composition adhésive aqueuse de l'invention contient également un latex, la résine thermodurcissable partiellement réticulée est généralement diluée dans l'eau, avant d'être ajoutée au latex ou aux latex (s'ils sont plusieurs) d'élastomère(s) insaturé(s), selon un mode opératoire général qui est bien connu de l'homme du métier. Les constituants de la composition adhésive sont avantageusement ajoutés dans l'ordre suivant : l'eau, d'éventuels additifs solubles dans l'eau (par exemple ammoniaque), le ou les latex (peu importe l'ordre), la résine thermodurcissable partiellement réticulée (diluée). L'ensemble est mélangé sous agitation pendant 1 à 30 min, par exemple à 20°C.

La concentration de la composition peut être ajustée en fonction de son utilisation spécifique (temps d'ouverture, viscosité).

Dans un premier mode de réalisation, la composition adhésive finale ainsi préparée, présente un taux d'extrait sec total, avantageusement un taux d'extrait sec de résine thermodurcissable compris entre 1 et 70 %, plus préférentiellement entre 1 et 50 % en poids.

Dans un second mode de réalisation, la composition adhésive finale ainsi préparée présente un taux d'extrait sec total, avantageusement un taux d'extrait sec de résine thermodurcissable compris entre 10 et 50 %, plus préférentiellement entre 20 et 40 % en poids.

Par taux d'extrait sec total de la composition adhésive, on entend le rapport entre la masse de résidu obtenue après séchage de la composition adhésive sur la masse de la composition adhésive avant séchage.

Par taux d'extrait sec de la résine thermodurcissable, on entend le rapport entre la masse de la résine thermodurcissable obtenue après séchage de la composition adhésive sur la masse de la composition adhésive avant séchage.

Ces deux taux d'extrait sec sont mesurés conformément à la norme NF EN 827 (mars 2006).

La composition pourra être utilisée immédiatement ou bien stockée à température ambiante (23°C) pendant un temps de maturation pouvant varier typiquement de une à plusieurs heures voire plusieurs jours, avant son utilisation finale.

Dans un premier mode de réalisation, la teneur en eau de la composition adhésive aqueuse de l'invention est comprise entre 50 et 90% en poids, de préférence entre 60 et 80%.

Dans un second mode de réalisation, la teneur en eau de la composition adhésive aqueuse de l'invention est comprise entre 60 et 90 % en poids, plus préférentiellement entre 60 et 85 % en poids.

Par teneur en eau de la composition adhésive aqueuse, on entend le poids en eau par rapport au poids total de la composition adhésive.

### Il - ASSEMBLAGE COLLÉ DE L'INVENTION

### 11.1 - Définitions ; exemples

Comme indiqué précédemment, la présente invention concerne également l'utilisation de la composition adhésive aqueuse précédemment décrite pour le collage de deux éléments, préférentiellement de deux éléments en bois.

Ainsi, un assemblage collé de deux éléments, préférentiellement de deux éléments en bois, selon l'invention comprend une couche de la composition adhésive aqueuse telle que décrite précédemment joignant les deux éléments l'un à l'autre.

Lorsque l'on utilise la colle selon l'invention pour le collage du bois, par bois, on entend le tissu végétal issu de plantes ligneuses. Des exemples de tissu végétal sont le tronc, les branches et les racines. Par exemple, les plantes ligneuses dont sont issues le tissu végétal sont le chêne, le châtaignier, le frêne, le noyer, le hêtre, le peuplier, le sapin, le pin, l'olivier, l'aulne ou encore le bouleau.

On pourra également utiliser la colle pour le collage d'éléments réalisés dans des matériaux différents du bois, par exemple les matières plastiques, par exemple les matières thermodurcissables ou thermoplastique, les textiles, les matières minérales ou les mélanges de ces matériaux, y compris avec le bois.

Par élément, on entend toute particule ou morceau monolithique. Des exemples d'éléments en bois sont des plis destinés à former un assemblage contreplaqué, des lattis destinés à former un assemblage latté, des particules telles que des copeaux, de la sciure, de la farine ou des flocons, pour former un assemblage aggloméré, que les particules soient orientées ou non, des fibres destinées à former un assemblage de fibres tel qu'un panneau haute ou moyenne densité, des morceaux de bois massif, également appelés bois d'oeuvre, destinés à former des assemblages tels que des meubles, des charpentes.

### 11.2 - Fabrication de l'assemblage collé

L'assemblage collé de l'invention peut être préparé selon un procédé de collage de deux éléments, préférentiellement de deux éléments en bois, dans lequel :
- on applique une couche de la composition adhésive aqueuse telle que décrite précédemment sur au moins l'un des deux éléments, et
- on joint les deux éléments l'un à l'autre par l'intermédiaire de la couche de la composition adhésive aqueuse.

L'étape d'application de la composition adhésive sur l'un ou les éléments peut être réalisée selon toute méthode appropriée, notamment par toute technique d'enduction connue telle que par exemple pulvérisation, imprégnation, injection sous pression ou encore par une combinaison d'une ou plusieurs de ces techniques.

Dans un mode de réalisation, on ajoute, à la composition adhésive aqueuse, un catalyseur postérieurement à l'étape d'application de la couche de la composition adhésive aqueuse. Dans un autre mode de réalisation, on ajoute un catalyseur à la composition adhésive aqueuse antérieurement à l'étape d'application de la couche de la composition adhésive aqueuse. Dans un autre mode de réalisation, on applique le catalyseur sur au moins l'un des deux éléments antérieurement à l'étape d'application de la couche de la composition adhésive aqueuse.

Le catalyseur est préférentiellement un acide fort, un acide organique ou une base faible. On citera par exemple l'acide chlorhydrique, les acides organiques tels que l'acide citrique ou l'acide ascorbique. On citera également, en tant que durcisseur, les sels d'ammonium ou encore l'hexaméthylène tétramine. Dans un mode de réalisation préféré, dans lequel on souhaite éviter l'utilisation de formaldéhyde ou de précurseur de formaldéhyde, on évitera l'utilisation d'hexaméthylène tétramine.

On pourra préférentiellement utiliser un taux de composition adhésive aqueuse allant de 50 à 350 gr.m⁻².

Après l'étape d'application de la composition adhésive, l'assemblage collé est chauffé à une température allant de 30°C à 200°C, de préférence de 80°C à 160°C en fonction des applications visées et en fonction du temps de chauffage qui, lui peut varier de quelques minutes à plusieurs heures.

De préférence, l'assemblage collé est maintenu sous pression, par exemple comprise entre 1 et 150 kg.cm-2. Plus préférentiellement, l'étape de maintien sous pression est réalisée simultanément avec l'étape de chauffage.

La durée de l'étape de chauffage, la température de chauffage et/ou la pression utilisée varient selon les cas, notamment en fonction du couple température-pression utilisé.

## Revendications

1. Composition adhésive aqueuse, **caractérisée en ce qu'**elle comprend une résine thermodurcissable est à base :
A1) d'au moins un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle; et
A2) de mélamine et/ou d'au moins un composé de formule (I) : 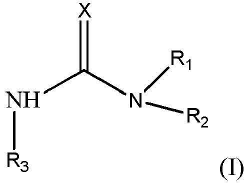 dans laquelle :
chaque groupe R₁, R₂, R₃ représente, indépendamment l'un de l'autre, un groupe alkyle, aryle, arylalkyle, alkylaryle, cycloalkyle ou hydrogène, et
X représente S, O ou N-R₄ avec R₄ représentant un groupe alkyle, aryle, arylalkyle, alkylaryle, cycloalkyle,
et **en ce que** la teneur en eau de la composition adhésive aqueuse est comprise entre 50 et 90% en poids, de préférence est comprise entre 60 et 80% en poids.

2. Composition selon la revendication 1, dans laquelle le composé aromatique A1 répond à la formule générale (III) : 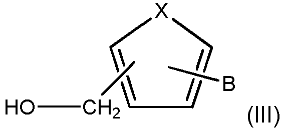 où B représente CHO ou CH₂OH, X représente O, NR₅, NO, S, SO, SO₂, SR₆R₇, R₅ représente un hydrogène, un groupe alkyle, aryle, arylalkyle, alkylaryle ou cycloalkyle, R₆, R₇ représentent chacun, indépendamment les uns des autres, un hydrogène, un groupe alkyle, aryle, arylalkyle, alkylaryle ou cycloalkyle.

3. Composition selon l'une quelconque des revendications précédentes, dans laquelle le composé aromatique A1 répond à la formule générale (III'a1) ou (III'a2) :

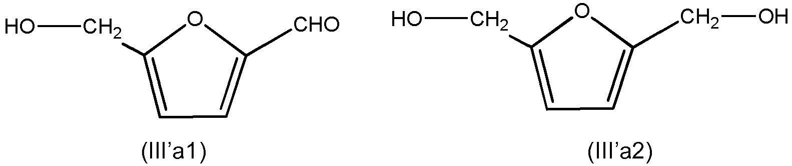

4. Composition selon l'une quelconque des revendications précédentes, dans laquelle R₁ représente hydrogène.

5. Composition selon l'une quelconque des revendications précédentes, dans laquelle R₂ représente hydrogène.

6. Composition selon l'une quelconque des revendications précédentes, dans laquelle X représente O.

7. Composition selon l'une quelconque des revendications précédentes, dans laquelle le composé A2) est une résine pré-condensée à base :
- de mélamine et/ou d'au moins un composé de formule (I) tel que défini à l'une quelconque des revendications précédentes, et
- à base d'au moins un composé susceptible de réagir avec ledit composé de formule (I) et/ou (I') comprenant au moins une fonction aldéhyde et/ou un composé susceptible de réagir avec ledit composé de formule (I) et/ou (I') comprenant au moins deux fonctions hydroxyméthyle portées par un noyau aromatique.

8. Composition selon la revendication précédente, dans laquelle le composé susceptible de réagir avec ledit composé de formule (I) et/ou (I') est choisi dans le groupe constitué par un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, le formaldéhyde, le furfuraldéhyde, le 2,5-furanedicarboxaldéhyde, le 1,4-benzènedicarboxaldéhyde, le 1,3-benzènedicarboxaldéhyde, le 1,2-benzènedicarboxaldéhyde et les mélanges de ces composés.

9. Composition selon la revendication 8, dans laquelle le composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, est choisi dans le groupe constitué par le 5-(hydroxyméthyl)-furfural, le 2,5-di(hydroxyméthyle)furane et les mélanges de ces composés.

10. Composition selon l'une quelconque des revendications précédentes, comprenant moins de 16 % en masse de latex d'élastomère diénique insaturé.

11. Composition selon la revendication précédente, comprenant au plus 10 %, de préférence au plus 5 %, et plus préférentiellement au plus 1% en masse de latex d'élastomère diénique insaturé.

12. Composition selon l'une quelconque des revendications précédentes, dans laquelle le taux d'extrait sec total de la composition adhésive aqueuse est compris entre 10 et 50% en poids, plus préférentiellement entre 20 et 40% en poids.

13. Utilisation d'une composition adhésive selon l'une quelconque des revendications 1 à 12 pour le collage de deux éléments, avantageusement de deux éléments en bois.

14. Procédé de collage de deux éléments, dans lequel:
- on applique une couche de la composition adhésive aqueuse selon l'une quelconque des revendications 1 à 12 sur au moins l'un des deux éléments, et
- on joint les deux éléments l'un à l'autre par l'intermédiaire de la couche de la composition adhésive aqueuse.

15. Assemblage collé de deux éléments comprenant une couche de la composition adhésive aqueuse selon l'une quelconque des revendications 1 à 12 joignant les deux éléments l'un à l'autre.

## Patentansprüche

1. Wässrige Klebstoffzusammensetzung, **dadurch gekennzeichnet, dass** sie ein wärmehärtbares Harz umfasst, das auf
A1) mindestens einer aromatischen Verbindung mit mindestens einem aromatischen Kern, der mindestens zwei Funktionen trägt, wobei es sich bei einer dieser Funktionen um eine Hydroxymethylfunktion handelt und es sich bei der anderen um eine Aldehydfunktion oder eine Hydroxymethylfunktion handelt; und
A2) Melamin und/oder mindestens eine Verbindung der Formel (I): 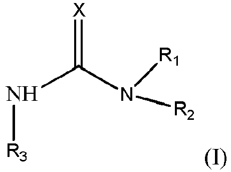 in der:
jede Gruppe R₁, R₂ und R₃ unabhängig voneinander für eine Alkyl-, Aryl-, Arylalkyl-, Alkylaryl-, Cycloalkyl- oder Wasserstoffgruppe steht und
X für S, O oder N-R₄ steht, wobei R₄ für eine Alkyl-, Aryl-, Arylalkyl-, Alkylaryl- oder Cycloalkylgruppe steht,
basiert, und dass der Wassergehalt der wässrigen Klebstoffzusammensetzung zwischen 50 und 90 Gew.-%, vorzugsweise 60 und 80 Gew.-%, liegt.

2. Zusammensetzung nach Anspruch 1, wobei die aromatische Verbindung A1 der folgenden allgemeinen Formel (II) entspricht: 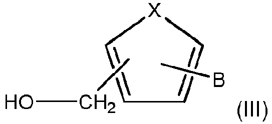 wobei B für CHO oder CH₂OH steht, X für O, NR₅, NO, S, SO, SO₂ oder SR₆R₇ steht, R₅ für Wasserstoff oder eine Alkyl-, Aryl-, Arylalkyl-, Alkylaryl- oder Cycloalkylgruppe steht, R₆, R₇ jeweils unabhängig voneinander für Wasserstoff oder eine Alkyl-, Aryl-, Arylalkyl-, Alkylaryl- oder Cycloalkylgruppe stehen.

3. Zusammensetzung nach einem der vorhergehenden Ansprüche, wobei die aromatische Zusammensetzung A1 der allgemeinen Formel (III'a1) oder (III'a2) entspricht:

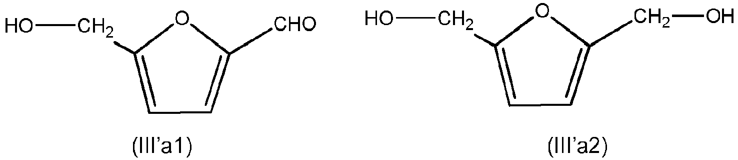

4. Zusammensetzung nach einem der vorhergehenden Ansprüche, wobei R₁ für Wasserstoff steht.

5. Zusammensetzung nach einem der vorhergehenden Ansprüche, wobei R₂ für Wasserstoff steht.

6. Zusammensetzung nach einem der vorhergehenden Ansprüche, wobei X für O steht.

7. Zusammensetzung nach einem der vorhergehenden Ansprüche, wobei es sich bei der Verbindung A2) um ein vorkondensiertes Harz auf Basis von
- Melamin und/oder mindestens einer Verbindung der Formel (I) gemäß einem der vorhergehenden Ansprüche und
- auf Basis mindestens einer Verbindung, die mit der Verbindung der Formel (I) und/oder (I') mit mindestens einer Aldehydfunktion reagieren kann, und/oder einer Verbindung, die mit der Verbindung der Formel (I) und/oder (I') mit mindestens zwei Hydroxymethylfunktionen an einem aromatischen Kern reagieren kann.

8. Zusammensetzung nach dem vorhergehenden Anspruch, wobei die Verbindung, die mit der Verbindung der Formel (I) und/oder (I') reagieren kann, aus der Gruppe bestehend aus einer aromatischen Verbindung mit einem aromatischen Kern, der mindestens zwei Funktionen trägt, wobei es sich bei einer dieser Funktionen um eine Hydroxymethylfunktion handelt und es sich bei der anderen um eine Aldehydfunktion oder eine Hydroxymethylfunktion handelt, Formaldehyd, Furfuraldehyd, 2,5-Furandicarboxaldehyd, 1,4-Benzoldicarboxaldehyd, 1,3-Benzoldicarboxaldehyd, 1,2-Benzoldicarboxaldehyd und Mischungen dieser Verbindungen ausgewählt ist.

9. Zusammensetzung nach Anspruch 8, wobei die aromatische Verbindung mit mindestens einem aromatischen Kern, der mindestens zwei Funktionen trägt, wobei es sich bei einer dieser Funktionen um eine Hydroxymethylfunktion handelt und es sich bei der anderen um eine Aldehydfunktion oder eine Hydroxymethylfunktion handelt, aus 5-(Hydroxymethyl)furfural, 2,5-Di(hydroxymethyl)furan und Mischungen dieser Verbindungen ausgewählt ist.

10. Zusammensetzung nach einem der vorhergehenden Ansprüche, umfassend weniger als 16 Massen-% Latex eines ungesättigten Dienelastomers.

11. Zusammensetzung nach dem vorhergehenden Anspruch, umfassend höchstens 10 Massen-%, vorzugsweise höchstens 5 Massen-% und weiter bevorzugt höchstens 1 Massen-% Latex eines ungesättigten Dienelastomers.

12. Zusammensetzung nach einem der vorhergehenden Ansprüche, wobei der Gesamtfeststoffgehalt der wässrigen Klebstoffzusammensetzung zwischen 10 und 50 Gew.-%, weiter bevorzugt zwischen 20 und 40 Gew.-%, liegt.

13. Verwendung einer Klebstoffzusammensetzung nach einem der Ansprüche 1 bis 12 zum Verkleben von zwei Elementen, vorzugsweise von zwei Elementen aus Holz.

14. Verfahren zum Verkleben von zwei Elementen, bei dem man:
- eine Schicht der wässrigen Klebstoffzusammensetzung nach einem der Ansprüche 1 bis 12 auf mindestens eines der zwei Elemente aufbringt und
- die beiden Elemente über die Schicht von wässriger Klebstoffzusammensetzung miteinander verbindet.

15. Kleberbund aus zwei Elementen, umfassend eine Schicht der wässrigen Klebstoffzusammensetzung nach einem der Ansprüche 1 bis 12, die beide Elemente miteinander verbindet.

## Claims

1. Aqueous adhesive composition, **characterized in that** it comprises a thermosetting resin, based on:
A1) at least one aromatic compound comprising at least one aromatic ring bearing at least two functions, one of these functions being a hydroxymethyl function and the other being an aldehyde function or a hydroxymethyl function; and
A2) melamine and/or at least one compound of formula (I): 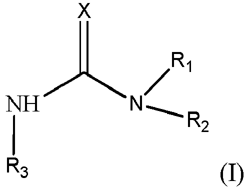 in which:
each group R₁, R₂, R₃ represents, independently of one another, an alkyl, aryl, arylalkyl, alkylaryl or cycloalkyl group or hydrogen, and
X represents S, O or N-R₄, with R₄ representing an alkyl, aryl, arylalkyl, alkylaryl or cycloalkyl group,
and **in that** the water content of the aqueous adhesive composition is between 50 and 90% by weight, preferably between 60 and 80% by weight.

2. Composition according to claim1, wherein the aromatic compound A1 corresponds to the general formula (III): 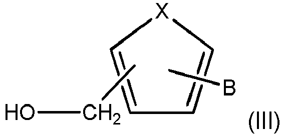 in which B represents CHO or CH₂OH, X represents O, NR₅, NO, S, SO, SO₂, SR₆R₇, R₅ represents a hydrogen, an alkyl, aryl, arylalkyl, alkylaryl or cycloalkyl group, R₆, R₇ each represent, independently of one another, a hydrogen, an alkyl, aryl, arylalkyl, alkylaryl or cycloalkyl group.

3. Composition according to any one of the preceding claims, wherein the aromatic compound A1 corresponds to the general formula (III'a1) or (III'a2):

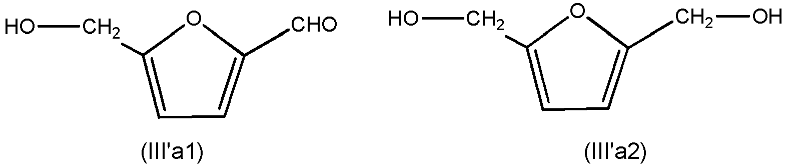

4. Composition according to any one of the preceding claims, wherein R₁ represents hydrogen.

5. Composition according to any one of the preceding claims, wherein R₂ represents hydrogen.

6. Composition according to any one of the preceding claims, wherein X represents O.

7. Composition according to any one of the preceding claims, wherein the compound A2) is a pre-condensed resin based:
- on melamine and/or on at least one compound of formula (I) as defined in any one of the preceding claims, and
- based on at least one compound capable of reacting with said compound of formula (I) and/or (I') comprising at least one aldehyde function and/or a compound capable of reacting with said compound of formula (I) and/or (I') comprising at least two hydroxymethyl functions borne by an aromatic ring.

8. Composition according to the preceding claim, wherein the compound capable of reacting with said compound of formula (I) and/or (I') is selected from the group consisting of an aromatic compound comprising an aromatic ring bearing at least two functions, one of these functions being a hydroxymethyl function, the other being an aldehyde function or a hydroxymethyl function, formaldehyde, furfuraldehyde, 2,5-furandicarboxaldehyde, 1,4-benzenedicarboxaldehyde, 1,3-benzenedicarboxaldehyde, 1,2-benzenedicarboxaldehyde and mixtures of these compounds.

9. Composition according to Claim 8, wherein the aromatic compound comprising an aromatic ring bearing at least two functions, one of these functions being a hydroxymethyl function, the other being an aldehyde function or a hydroxymethyl function, is selected from the group consisting of 5-(hydroxymethyl)furfural, 2,5-di(hydroxymethyl)furan and mixtures of these compounds.

10. Composition according to any one of the preceding claims, comprising less than 16% by weight of unsaturated diene elastomer latex.

11. Composition according to the preceding claim, comprising at most 10%, preferably at most 5%, and more preferentially at most 1% by weight of unsaturated diene elastomer latex.

12. Composition according to any one of the preceding claims, wherein the total solids content of the aqueous adhesive composition is between 10 and 50% by weight, more preferentially between 20 and 40% by weight.

13. Use of an adhesive composition according to any one of Claims 1 to 12 for adhesively bonding two elements, advantageously two wooden elements.

14. Process for adhesively bonding two elements, wherein:
- a layer of the aqueous adhesive composition according to any one of Claims 1 to 12 is applied to at least one of the two elements, and
- the two elements are joined to one another via the layer of aqueous adhesive composition.

15. Adhesively bonded assembly of two elements comprising a layer of the aqueous adhesive composition according to any one of Claims 1 to 12 joining the two elements to one another.
